(19) Europäisches Patentamt
European Patent Office
Office européen des brevets

(11) Veröffentlichungsnummer: **0 355 759**
**A2**

(12) # EUROPÄISCHE PATENTANMELDUNG

(21) Anmeldenummer: 89115339.7

(22) Anmeldetag: 19.08.89

(51) Int. Cl.4: **A01N 25/30 , A01N 47/34 , A01N 57/12**

(30) Priorität: 22.08.88 US 234689

(43) Veröffentlichungstag der Anmeldung: 28.02.90 Patentblatt 90/09

(84) Benannte Vertragsstaaten: AT BE CH DE ES FR GB IT LI NL

(71) Anmelder: **BASF Aktiengesellschaft**
**Carl-Bosch-Strasse 38**
**D-6700 Ludwigshafen(DE)**

(72) Erfinder: **Kuenast, Christoph, Dr.**
**Salierstrasse 2**
**D-6701 Otterstadt(DE)**
Erfinder: **Hofmeister, Peter, Dr.**
**Bernard-Humblot-Strasse 12**
**D-6730 Neustadt(DE)**
Erfinder: **Harries, Volker, Dr.**
**Immengaertenweg 29 e**
**D-6710 Frankenthal-Flomersheim(DE)**
Erfinder: **Neubauer, Hans-Juergen, Dr.**
**Mozartstrasse 6**
**D-4400 Muenster-Hiltrop(DE)**
Erfinder: **Ohi, Takuo, Dr.**
**5-36-2 Denenchofu Ota-ku**
**Tokyo(JP)**
Erfinder: **Kojima, Ken-Ichi, Dr.**
**5-4-49 Tsunashima-shi Kohoku-ku**
**Yokohama(JP)**
Erfinder: **Ishida, Christopher Akira, Dr.**
**2143 So Divisadero Street**
**Visalia, CA 93277(US)**
Erfinder: **Fletcher, William Maurice**
**19255 Avenue 370**
**Woodlake, CA 93286(US)**
Erfinder: **Kleuser, Dieter, Dr.**
**Pierstrasse 4**
**D-6710 Frankenthal(DE)**

(54) **Pflanzenschutzmittel.**

(57) Pflanzenschutzmittel, enthaltend eine insektizid wirksame Menge eines Thiophosphorsäureesters oder eines Benzoylphenylharnstoffderivates als Wirkstoff und als Wirkungsverstärker mindestens 5 Gew.%, bezogen auf das Wirkstoffgewicht, eines Fettalkoholalkoxylats der durchschnittlichen Formel I

$R\text{-}O\text{-}[EO]_x\text{-}[PO]_y\text{-} \quad H \quad (I),$

in der R den Alkylrest eines Fettalkohols mit insbesondere 10 bis 20 C-Atomen, EO die Ethylenoxygruppe, PO die Propylenoxygruppe und x, y unabhängig die Zahlen von 2 bis 12 bedeuten mit der Maßgabe, daß die Reihenfolge der [EO]- und [PO]-Einheiten beliebig ist.

EP 0 355 759 A2

## Pflanzenschutzmittel

Die Erfindung betrifft Pflanzenschutzmittel, enthaltend einen insektizid wirksamen Thiophosphorsäureester oder ein Benzoylphenylharnstoffderivat als Wirkstoff sowie einen Zusatz zur Wirkungsverstärkung.

Die Ausbringung von Wirkstoffen erfolgt üblicherweise formuliert, d.h. unter Zusatz von Hilfsmitteln wie z.B. oberflächenaktiven Stoffen. Die den Wirkstoff und Formulierungshilfsstoffe enthaltenden Mittel sind dann für den Anwender in der üblichen Weise handhabbar.

Es ist bekannt, daß bei Herbiziden polyethoxylierte Talgfettamine die Wirksamkeit steigern können, so daß zur Erzielung der gleichen herbiziden Wirkung geringere Aufwandmengen ausreichen. Die Hersteller solcher Tenside weisen jedoch darauf hin, daß solche Ergebnisse nicht verallgemeinerbar sind. In wenigen Fällen sind Wirkungssteigerungen bei Fungiziden bekannt geworden. Aus der deutschen Anmeldung P 36 43 246 ist bekannt, daß ethoxylierte Talgfettamine bestimmte Harnstoffderivate zur Abszission von Pflanzenteilen in ihrer Wirkung verstärken.

Bei Pflanzenschutz- und Pflanzenbehandlungsmitteln ist es grundsätzlich wünschenswert, die spezifische Wirkung und die Wirkungssicherheit zu erhöhen. Es ist daher eine Aufgabe der Erfindung, ein möglichst wenig toxisches Mittel aufzufinden, mit dem die Wirkung von Mitteln, die insektizide Thiophosphorsäureester oder Benzoylphenylharnstoffe als Wirkstoffe enthalten, verstärkt wird, so daß die zur Schädlingsbekämpfung notwendige Menge an insektizidem Wirkstoff herabgesetzt werden kann.

Es wurde nun gefunden, daß bestimmte, als Formulierungshilfsmittel bekannte nichtionische Tenside eine starke Steigerung der Wirksamkeit und eine Verbesserung der Wirksicherheit herbeiführen.

Erfindungsgegenstand ist somit ein Pflanzenschutzmittel, enthaltend eine insektizid wirksame Menge eines Thiophosphorsäureesters oder eines Benzoylphenylharnstoffderivates als Wirkstoff und als Wirkungsverstärker mindestens 1 Gew.%, bezogen auf das Wirkstoffgewicht, eines Fettalkoholalkoxylats der durchschnittlichen Formel I

$R\text{-}O\text{-}[EO]_x\text{-}[PO]_y\text{-}H$ (I),

in der R den Alkylrest eines Fettalkohols mit 10 bis 20, insbesondere 11 bis 20 C-Atomen, EO die Ethylenoxygruppe, PO die Propylenoxygruppe und x, y unabhängig voneinander die Zahlen von 2 bis 12 bedeuten mit der Maßgabe, daß die Reihenfolge der [EO]- und [PO]-Einheiten beliebig ist.

Als Wirkungsverstärker sind insbesondere solche Fettalkoholalkoxylate der Formel I vorteilhaft, die auf einem Fettalkohol mit überwiegend 16 bis 18 C-Atomen (z.B. Talgfettalkohole, Oxoalkohole) aufgebaut sind und [EO]/[PO]-Blockpolymerisate darstellen. Bevorzugt hat der [EO]/[PO]-Polyetheralkoholteil eine Kettenlänge von 2 bis 12 Ethylenoxid- und Propylenoxideinheiten.

Ganz besonders bevorzugt sind Fettalkoholalkoxylate der Formel Ia

$H(CH_2)_{16-18}\text{-}O\text{-}[EO]_{2-6}\text{-}[PO]_{2-10}\text{-}H$ (Ia)

Die erfindungsgemäßen alkoxylierten Fettalkohole sind in handelsüblichen, für verschiedene Zwecke empfohlenen Mitteln enthalten oder diese Mittel bestehen aus entsprechenden alkoxylierten Fettalkoholen. Sie haben keine oder nur vernachlässigbar geringe Nebenwirkungen. Geeignete Handelsprodukte sind ohne weiteres verfügbar (z.B. Produkte der Pluronic®- und Plurafac®-Reihe, BASF AG) und bedürfen keiner weiteren Erläuterung.

Erfindungsgemäß werden die Fettalkoholalkoxylate den Wirkstoffen in einer Menge von mindestens 1 Gew.% bezogen auf den Wirkstoff, zugesetzt. Bevorzugt ist die 0,05- bis 10-fache, insbesondere die 0,1- bis 5-fache, besonders bevorzugt die 0,3- bis 2-fache Menge an I, bezogen auf das Wirkstoffgewicht. Die Zugabe kann im Wege der Beimischung zur Formulierung oder erst beim Ansetzen der Spritzbrühe (sog. Tankmix) geschehen.

Die Verfahren zur Herstellung der Fettalkoholalkoxylate sind Stand der Technik und erfolgen üblicherweise durch basenkatalysierte Alkoxylierung von Fettalkoholen mit Ethylenoxid und Propylenoxid.

Als Thiophosphorsäureester können die in K.H. Buchel, Pflanzenschutz- und Schädlingsbekämpfungsmittel, 1977, G. Thieme-Verlag, Stuttgart, S. 26-40, beschriebenen insektizid wirksamen Verbindungen verwendet werden. Besonders bevorzugt ist das O,O-Dimethyl-S-(2-methylamino)-2-oxoethyl)dithiophosphat (Dimethoat, vgl. Römpps Chemie-Lexikon, 8. Aufl., S. 964/965).

Als Benzoylphenylharnstoffderivate können beispielsweise die in DE-A-21 23 236, EP-B-101 990, EP-B-57 888, EP-B-56 124, EP-A-161 019, EP-A-142 667, EP-A-224 219 sowie von Takashi Mitsui in Japan Pesticide Information No. 47 (1985), S. 3-7, von I. Ishaaya et al in Crop Protection (1986) 5, S. 385-388 und von M. Anderson et al in British Crop Protection Conference-Pests and Diseases, 1986, 2B-1, S. 89-96 beschriebenen substituierten Benzoylphenylharnstoffe verwendet werden. Bevorzugt sind Verbindungen der allgemeinen Formel II

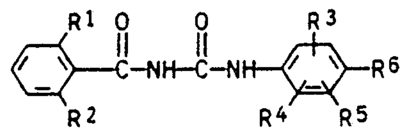

(II),

in der die Substituenten die folgende Bedeutung haben:

$R^1$, $R^2$ Wasserstoff, Chlor, Fluor,

$R^3$ bis $R^5$ Wasserstoff, Halogen wie Fluor, Chlor oder Brom, insbesondere Chlor,

$R^6$ Halogen wie Fluor, Chlor oder Brom, insbesondere Fluor oder Chlor, $C_1$-$C_4$-Alkyl wie Methyl, Ethyl, Propyl, iso-Propyl, Butyl, iso-Butyl, sec.-Butyl, das unsubstituiert ist oder inerte Substituenten wie Halogen, z.B. Fluor oder Chlor, wie Trifluormethyl, oder die Gruppe

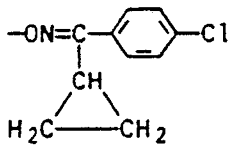

trägt, $C_1$-$C_{12}$-Alkoxy wie Methoxy, Ethoxy, Propoxy, Isopropoxy, Butyloxy, Pentyloxy, Hexyloxy, Heptyloxy, Nonyloxy, Decyloxy oder Dodecyloxy und deren Isomere, $C_1$-$C_4$-Halogenalkoxy, insbesondere $C_1$- und $C_2$-Fluoralkoxy wie Trifluorethoxy, 1,2-Difluorethoxy oder 1,1,2,2-Tetrafluorethoxy, gegebenenfalls substituiertes Phenoxy, wobei der Phenylkern 1 oder 2 inerte Substituenten wie Halogen, z.B. Fluor, Chlor oder Brom, Trifluormethyl oder Methyl trägt, gegebenenfalls substituierter heteroaromatischer Rest mit 1, 2 oder 3 Stickstoffatomen und 5 oder 6 Ringgliedern wie Pyridin-2-yl, Pyridin-3-yl, Pyridin-4-yl, Pyrimidin-2-yl, Pyrimidin-4-yl, Pyrimidin-5-yl, Pyridazin-3-yl, Pyridazin-4-yl, Pyrazin-2-yl, Pyrazin-3-yl, s-Triazin-2-yl, besonders bevorzugt Pyridin-2-yl, Pyrimidin-2-yl, Imidazol-1-yl, Imidazol-2-yl, Pyrazol-1-yl oder Pyrrol-1-yl, wobei als Substituenten Fluor, Chlor oder Brom, Trifluormethyl oder Methyl in Frage kommen, $COOR^7$, wobei $R^7$ einen verzweigten oder unverzweigten $C_1$-$C_{10}$-Alkylrest wie Methyl, Ethyl, Propyl, Isopropyl, Butyl, Pentyl, Hexyl, Heptyl, Nonyl, Decyl und deren Isomere bedeutet.

Bevorzugte Benzoylphenylharnstoffe zeigen die folgenden Strukturen:

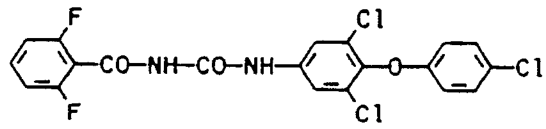

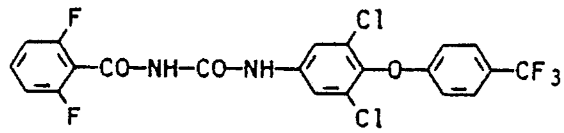

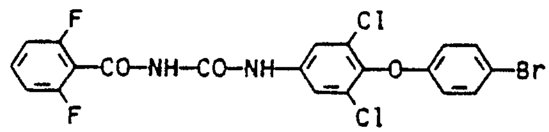

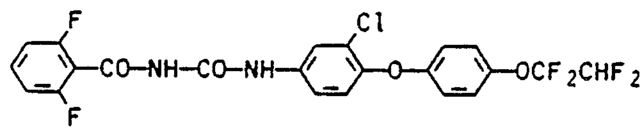

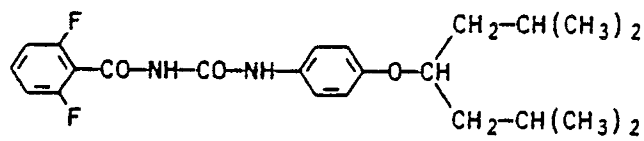

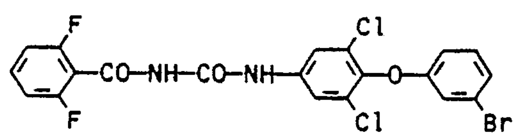

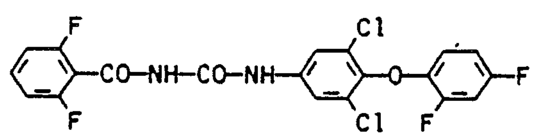

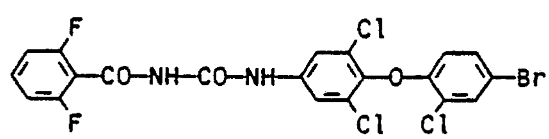

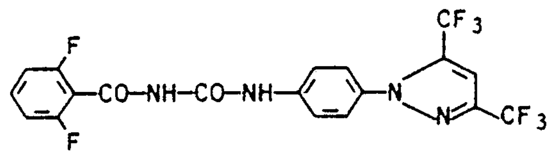

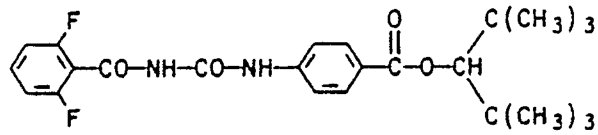

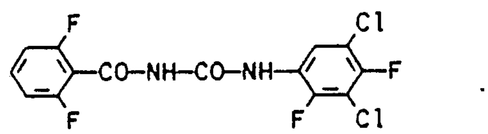

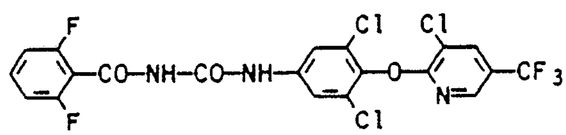

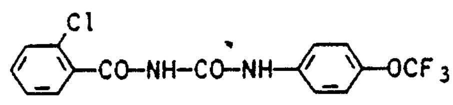

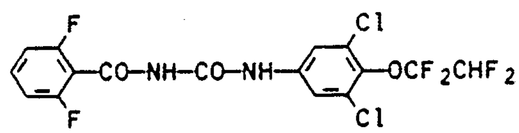

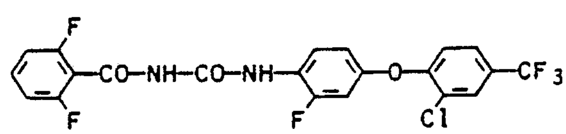

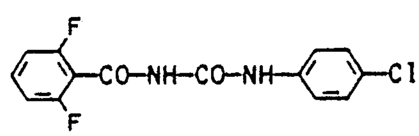

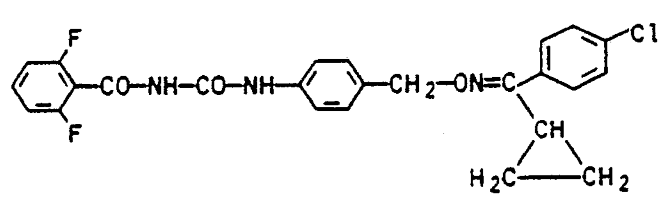

Der erfindungsgemäße Zusatz verbessert die bekannten Mittel erheblich. Die Verbesserung der Wirkungsstärke und der Wirkungssicherheit der zugrundeliegenden Wirkstoffe ist überraschend, vor allem weil sich gezeigt hat, daß viele andere Tenside z.T. starke Nebenwirkungen haben; so wurden bei gewissen Fettaminderivaten Nekrosen an den Blättern beobachtet, obwohl die aufgewendeten Mengen nur gering waren.

In der Anwendung unterscheiden sich die erfindungsgemäßen Mittel nicht vom Stand der Technik, sie besitzen jedoch durch den erreichten geringeren Wirkstoffbedarf einen erheblichen ökonomischen und ökologischen Vorteil.

Die Wirkstoffe plus Wirkungsverstärker können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewahrleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können als Emulsionskonzentrate, Pasten oder netzbare Pulver (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäüre, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkali, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin-Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% an Wirkstoff plus Fettalkoholalkoxylat 1, vorzugsweise zwischen 0,5 und 90 Gew.%.

Die Mittel können durch Mischen mit weiteren üblichen Formulierungshilfsmitteln als Fertigformulierung zur Anwendung kommen. Ebenso möglich ist die Anwendung in Form eines Adjuvants, d. h. der Einsatz im Tankmixverfahren. Hierzu ist es u. U. notwendig, das Adjuvant in Form einer Prämix vorzubereiten, um eine homogene physikalische Verteilung in der Spitzbrühe zu gewährleisten.

Die nachfolgenden Beispiele veranschaulichen die Erfindung.

Allgemeine Herstellvorschrift der Fettalkoholalkoxylate I

Herstellung des Produkts Nr. 3 der nachfolgenden Tabelle

In einem 10 l Stahlkessel werden 1602 g des gesättigten Fettalkohols HYDRENOL D® (Henkel KGaA, bestehend aus ca. 1/3 n-C16 und 2/3 n-C18) und 19,4g 45 %iger Kalilauge 1 Stunde im Vakuum bei 100 °C gerührt. Anschließend werden bei 110 °C über einen Zeitraum von 1 Stunde insgesamt 1188 g Ethylenoxid (4,5 Eq.) eingegast, wobei der Druck auf 6,0 bar konstant gehalten wird. Nach Abreaktion des Ethylenoxids (Druckminderung auf 3,3 bar innerhalb 1,5 Stunden) werden insgesamt 1569 g Propylenoxid (4,5 Eq.) bei 110 °C und einem Druck von 3,5 bar innerhalb 2 Stunden eingegast. Nach beendeter Zugabe wird noch 5 Stunden bei 110 °C nachgerührt. Übliche Aufarbeitung und Neutralisation mit Essigsäure liefert das Blockpolymerisat Nr. 3 der nachfolgenden Tabelle in quantitativer Ausbeute.

Die in der nachstehenden Tabelle 1 aufgeführten Verbindungen sind analog herstellbar oder kommerziell erhältlich.

Tabelle 1

| Nr. | Formel | Polymerisationstyp | OH-Zahl [mg KOH/g] | Viskosität[b] [mPas] bei 25 °C | Dichte bei 23 °C |
|---|---|---|---|---|---|
| 1 | R[a]-O-$[EO]_{4.5}$-$[PO]_{8.6}$-H | Block | 58 | 70 | 0.96 |
| 2 | R-O-$[EO]_{4.5}$-$[PO]_{7.0}$-H | Block | 65 | 73 | 0.96 |
| 3 | R-O-$[EO]_{4.5}$-$[PO]_{4.5}$-H | Block | 78 | 60 | 0.95 |
| 4 | R-O-$[EO]_{4.5}$-$[PO]_{2.0}$-H | Block | 96 | fest | fest |
| 5 | R-O-$[EO]_{3.0}$-$[PO]_{8.6}$-H | Block | 63 | 73 | 0.96 |
| 6 | R-O-$[EO]_{8.0}$-$[PO]_{8.6}$-H | Block | 53 | 107 | 0.99 |
| 7 | R-O-$[EO]_{12.0}$-$[PO]_{8.6}$-H | Block | 43 | 140 | 1.00 |
| 8 | R-O-$[EO]_{11.0}$-$[PO]_{2.0}$-H | Block | 62 | fest | fest |
| 9 | R-O-$[EO]_{7.5}$-$[PO]_{5.5}$-H | Block | 61 | 88 | 0.98 |
| 10 | R-O-$[EO]_{8.6}$-$[PO]_{4.5}$-H | Block | 59 | 95 | 0.97 |
| 11 | R-O-$[EO]_{4.5}$-$[PO]_{8.6}$-H | Misch | 58 | 82 | 0.97 |

[a] R: Talgfettalkoholgemisch $C_{16}/C_{18} \approx 2/1$

[b] bestimmt nach Brookfield

Formulierungsbeispiele

Für die nachfolgenden Anwendungsbeispiele wurden folgende Formulierungen gewählt:

I. 150-250 g/l Dimethoat
300-500 g/l Fettalkoholalkoxylat gemäß Tabelle 1
50 g/l Xylol
80 g/l Rizinusöl-ethoxylat als Emulgator
ad 1000 ml Cyclohexanon als Lösungsmittel

II. 50 g/l Benzoylharnstoff A oder B
150-300 g/l Fettalkoholalkoxylat gemäß Tabelle 1
28 g/l Dodecylbenzolsulfonatkalziumsalz als Emulgator
42 g/l Isooctylphenolalkoxylat als Emulgator
ad 1000 ml Cyclohexanon als Lösungsmittel

Anwendungsbeispiele

In den nachstehenden Beispielen wurde ein handelsübliches Fettalkoholalkoxylat (FAA), ein Gemisch der mittleren Formel R-O-$[EO]_{4.5}$-$[PO]_{8.6}$-H, jeweils im Gemisch mit verschiedenen Wirkstoffen untersucht. Die dabei verwendeten Wirkstoffe waren:

Wirkstoff A:

N-2,6-Difluorbenzoyl-N′-[3,5-dichlor-4-(4-chlorphenoxy]phenylharnstoff

Wirkstoff B:

N-2,6-Difluorbenzoyl-N′-[3,5-dichlor-4-(4-bromphenoxy)]phenylharnstoff

Wirkstoff C:

Dimethoat

Beispiel 1

| Beispiel 1 | | |
|---|---|---|
| Keiferia lycopersicella (Tomatenminimiermotte) an Tomate | | |
| (Gewächshaus, 18 Tage nach Behandlung, 9 Pflanzen/Parzelle, 1 200 l/ha; frühkurative Behandlung: 7 Tage nach Besiedlung mit Adulten) | | |
| Wirkstoff(mischung) | g a.S./ha | % Fraßschaden |
| Unbeh. Kontrolle | - | 85 |
| A | 80 | 24 |
| A + FAA | 80 + 1500 | 17 |
| B | 80 | 45 |
| B + FAA | 80 + 1500 | 9 |
| A | 200 | 24 |
| A + FAA | 200 + 1500 | 10 |
| B | 200 | 30 |
| B + FAA | 200 + 1500 | 10 |

| Beispiel 2 | | | |
|---|---|---|---|
| Keiferia lycopersicella (Tomatenminiermotte) an Tomate | | | |
| (1,5 x 0,75 x 1,2 m-Käfig-Freilandparzellen, 2 Wiederholungen, 1 100 l/ha, präventive Behandlung: 1 Tag vor Besiedlung mit Adulten) | | | |
| Wirkstoff(mischung) | g a.S./ha | % Schadfraß | % Schadfraß |
| Unbeh. Kontrolle | - | 79 | 32 |
| A | 180 | 18 | 8 |
| A + B | 180 + 2250 | 6 | 5 |

| Beispiel 3 | | | |
|---|---|---|---|
| Liriomyza sativae (Minierfliege) an Bohnen | | | |
| (Gewächshaus, 4 Wiederholungen, 400 l/ha, früh-kurative Behandlung) | | | |
| Wirkstoff(mischung) | g a.S./ha | % Wirkung (Puppen/Blatt) | % Schlupf von Adulten |
| Unbeh. Kontrolle | - | 0 (38,5) | 69 |
| A + FAA | 200 + 125 | 27 | 2 |
| A + FAA | 200 + 250 | 49 | 0 |
| A + FAA | 200 + 500 | 56 | 0 |
| A + FAA | 200 + 1000 | 96 | 0 |
| A + FAA | 200 + 1500 | 99 | 0 |

| Beispiel 4 | | | |
|---|---|---|---|
| Liriomyza sativae (Minierfliege) an Bohnen | | | |
| (Gewächshaus, 4 Wiederholungen, 400 l/ha, früh-kurative Behandlung) | | | |
| Wirkstoff(mischung) | g a.S./ha | % Wirkung (Puppen/Blatt) | % Schlupf von Adulten |
| A + FAA | 200 + 2000 | 99 | 0 |
| Cyromazine | 140 | 100 | 0 |

Cyromazine ist bisher der einzige Entwicklungshemmstoff mit hervorragender Minierfliegenwirkung, und neben Abamectin das einzige Insektizid mit guter Wirkung gegen Liriomyza sativae/L. trifolii.

| Beispiel 5 | | | |
|---|---|---|---|
| Liriomyza sativae an Bohne | | | |
| (Gewächshaus, 4 Wiederholungen, 400 l/ha, Präventive Behandlung im Keimblattstadium); Auswertung auch nach phytotoxischen Merkmalen | | | |
| Wirkstoff(mischung) | g a.S./ha | % Wirkung (14 Tage n.Beh.) Puppen/Blatt | % Phytotox. |
| Unbeh. Kontrolle | - | 0 (30,5) | 0 |
| A | 200 | 23 | 0 |
| A + FAA | 200 + 250 | 61 | 0 |
| A + FAA | 250 + 500 | 83 | 0 |
| A + FAA | 200 + 1000 | 98 | 0 |
| A + FAA | 200 + 1500 | 98 | 0 |
| A + FAA | 200 + 2000 | 99 | 3 |

Beispiel 6

Keiferia lycopersicella; Versuchsdurchführung wie in Beispiel 5

| Beispiel 6 | | | |
|---|---|---|---|
| Keiferia lycopersicella; Versuchsdurchführung wie in Beispiel 5 | | | |
| Wirkstoff(mischung) | g a.S./ha | % Fraßschaden | |
| | | 35 Tage | 55 Tage |
| | | nach Behandlung | |
| unbeh. | - | 62 | 75 |
| A + FAA | 0,02 + 2,0 | 5 | 12 |
| A | 0,2 | 9 | 13 |

Beispiel 7

Nephotettix cinctipes (Reiszikade) Kontakt, Spritzversuch

Versuchsdurchführung

Reispflanzen (ca. 8 cm hoch) in Kunststofftöpfen (Φ 9 cm) werden in der Spritzkabine mit der wäßrigen Wirkstoffaufbereitung tropfnaß gespritzt und nach dem Abtrocknen unter einen Kunststoffzylinder gestellt (Φ 12 cm, Höhe 20 cm). Man belegt mit 10 adulten Zikaden und verschließt mit Gaze.

Nach 48 h wird die Mortalität in % bestimmt.

| Wirkstoffmischung (Mengenverhältnis) | Konzentration[a] (%) | Mortalität (%) |
|---|---|---|
| unbehandelte Kontrolle | - | 0 |
| C | 0,01 | 100 |
| | 0,004 | 100 |
| | 0,002 | 100 |
| | 0,001 | ca. 80 |
| | 0,0004 | ca. 60 |
| | 0,0002 | 0 |
| C + FAA (1:0,3) | 0,01 | 100 |
| | 0,004 | 100 |
| | 0,002 | 100 |
| | 0,001 | ca. 80 |
| | 0,0004 | ca. 80 |
| | 0,0002 | 100 |
| C + FAA (1:1) | 0,01 | 100 |
| | 0,004 | 100 |
| | 0,002 | ca. 80 |
| | 0,001 | ca. 80 |
| | 0,0004 | ca. 60 |
| | 0,0002 | ca. 60 |
| FAA | 0,01 bis 0,0002 | 0 |

a) Konzentration an Wirkstoff C + FAA

Beispiel 8

Aphis fabae (Schwarze Laus), Kontaktwirkung, Spritzversuch

Versuchsdurchführung

Junge Bohnenpflanzen (Vicia faba) mit einer starken Kolonie der Schwarzen Laus werden mit der wäßrigen Aufbereitung des Versuchsmittels behandelt. Die Pflanze kommt dazu auf den Drehteller der Spritzkabine und wird mit insgesamt 50 ml der Aufbereitung allseitig besprüht. Hierfür benötigt man ca. 20 sec. Nach 24 Stunden wird die Mortalität ermittelt.

| Wirkstoffmischung (Mengenverhältnis) | Konzentration[a] (%) | Mortalität (%) |
|---|---|---|
| unbehandelte Kontrolle | - | 0 |
| C | 0,01 | 100 |
| | 0,004 | 100 |
| | 0,002 | ca. 80 |
| | 0,001 | ca. 60 |
| C + FAA (1:1) | 0,01 | 100 |
| | 0,004 | 100 |
| | 0,002 | 100 |
| | 0,001 | 100 |
| C + FAA (1:5) | 0,01 | 100 |
| | 0,004 | 100 |
| | 0,002 | ca. 80 |
| | 0,001 | ca. 60 |
| FAA | 0,01 bis 0,0001 | 0 |

a) Konzentration an C + FAA

Beispiel 9

Megoura viciae (Wickenlaus), Kontaktwirkung

Versuchsdurchführung

Getopfte Bohnenpflanzen (Vicia faba) werden in der Spritzkabine mit 50 ml der wäßrigen Wirkstoffaufbereitung tropfnaß gespritzt. Pro Konzentration wird 1 Pflanze behandelt und geprüft. Nach Abtrocknen des Spritzbelages werden die Pflanzen mit 30 bis 40 Blattläusen belegt. Eine durchsichtige Kunststoffröhre (Φ 12 cm), deren Oberkante mit Fluon behandelt ist, verhindert das Entweichen der Läuse. Unter der Pflanze liegt ein weißes Papier mit Einschnitt, auf dem die toten Blattläuse leichter zu zählen sind. 24 Stunden nach Aufsetzen der Läuse wird die Mortalitätsrate ermittelt.

| Wirkstoffmischung (Mengenverhältnis) | Konzentration[a)] (%) | Mortalität (%) |
|---|---|---|
| unbehandelte Kontrolle | - | 0 |
| C | 0,01 | 100 |
| | 0,0004 | ca. 60 |
| | 0,0002 | 0 |
| C + FAA (1:0,3) | 0,001 | 100 |
| | 0,0004 | ca. 80 |
| | 0,0002 | ca. 80 |
| FAA | 0,01 bis 0,0002 | 0 |

a) Konzentration an C + FAA

## Ansprüche

1. Pflanzenschutzmittel, enthaltend eine insektizid wirksame Menge eines Thiophosphorsäureesters oder eines Benzoylphenylharnstoffderivates als Wirkstoff und als Wirkungsverstärker mindestens 1 Gew.%, bezogen auf das Wirkstoffgewicht, eines Fettalkoholalkoxylats der durchschnittlichen Formel I

$R\text{-}O\text{-}[EO]_x\text{-}[PO]_y\text{-}H$ (I),

in der R den Alkylrest eines Fettalkohols mit 10 bis 20 C-Atomen, EO die Ethylenoxygruppe, PO die Propylenoxygruppe und x, y unabhängig voneinander Zahlen von 2 bis 12 bedeuten mit der Maßgabe, daß die Reihenfolge der [EO]- und [PO]-Einheiten beliebig ist.

2. Pflanzenschutzmittel nach Anspruch 1, dadurch gekennzeichnet, daß es ein Fettalkoholalkoxylat der durchschnittlichen Formel Ia

$H\text{-}(CH_2)_{16-18}\text{-}O\text{-}[EO]_{2-6}\text{-}[PO]_{2-10}\text{-}H$ (Ia)

enthält.

3. Pflanzenschutzmittel nach den Ansprüchen 1 und 2, dadurch gekennzeichnet, daß die 0,01- bis 10-fache Menge Fettalkoholalkoxylat I, bezogen auf das Wirkstoffgewicht, vorliegt.

4. Pflanzenschutzmittel nach Anspruch 1, enthaltend Dimethoat als Wirkstoff und an sich übliche inerte Zusatzstoffe.

5. Pflanzenschutzmittel nach Anspruch 1, enthaltend einen Benzoylphenylharnstoff der allgemeinen Formel II

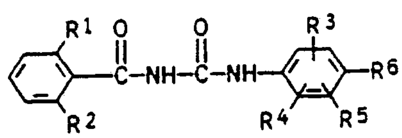

(II),

in der die Substituenten die folgende Bedeutung haben:

$R^1$, $R^2$ Wasserstoff, Chlor, Fluor,

$R^3$ bis $R^5$ Wasserstoff, Halogen,

$R^6$ Halogen, unsubstituiertes oder substituiertes $C_1$-$C_4$-Alkyl, $C_1$-$C_{12}$-Alkoxy, $C_1$-$C_4$-Halogenalkoxy, unsubstituiertes oder substituiertes Phenoxy, gegebenenfalls substituierter heteroaromatischer Rest mit 5 oder 6 Ringgliedern und 1 bis 3 Stickstoffatomen, $COOR^7$, wobei $R^7$ $C_1$-$C_{10}$-Alkyl bedeutet,

als Wirkstoff und an sich übliche inerte Zusatzstoffe.

6. Pflanzenschutzmittel gemäß Anspruch 1, dadurch gekennzeichnet, daß es 0,1 bis 95 Gew.% eines

Gemisches aus insektizidem Wirkstoff und Fettalkoholalkoxylat I enthält.

7. Verfahren zur Bekämpfung von Schädlingen an Pflanzen, dadurch gekennzeichnet, daß man die von Schädlingen freizuhaltenden Pflanzen mit einer für Schädlinge wirksamen Menge eines Gemisches aus insektizidem Wirkstoff und Fettalkoholalkoxylat der Formel I gemäß Anspruch 1 behandelt.